# FASCICULE DE BREVET EUROPEEN

(11) **EP 2 411 250 B1**
(45) Date de publication et mention de la délivrance du brevet: **03.07.2013**
(21) Numéro de dépôt: 10708549.0
(22) Date de dépôt: 15.03.2010
(51) Int. Cl.: B60R 25/02, F16C 11/04, B60R 11/00

(54) **DISPOSITIF ANTIVOL POUR COLONNE DE DIRECTION ET PROCEDES ASSOCIES DE MONTAGE D'UN ETRIER DE MAINTIEN**
DIEBSTAHLSCHUTZVORRICHTUNG FÜR EINE LENKSÄULE UND VERWANDTE VERFAHREN ZUR BEFESTIGUNG EINER HALTEKLEMME
ANTITHEFT DEVICE FOR A STEERING COLUMN, AND RELATED METHODS FOR MOUNTING A SUPPORT CLAMP

(30) Priorité: 25.03.2009 FR 0901407
(43) Date de publication de la demande: 01.02.2012
(73) Titulaire: Valeo Sécurité Habitacle, 94046 Créteil Cedex (FR)
(72) Inventeur: FENAYON, Ludovic, 94042 Créteil (FR); PERRIN, Christophe, 94042 Créteil (FR)
(74) Mandataire: Croonenbroek, Thomas Jakob
(86) Numéro de dépôt international: PCT/EP2010/053283
(87) Numéro de publication internationale: WO 2010/108808

(56) Documents cités:
- DE-A1- 1 755 666
- DE-A1- 2 035 507
- US-A1- 2007 068 207

## Description

L'invention concerne un dispositif antivol pour une colonne de direction de véhicule automobile.

L'invention concerne plus particulièrement un dispositif antivol, du type comportant un boîtier dans lequel est agencé un mécanisme d'antivol prévu pour immobiliser la colonne de direction. Un dispositif antivol comprenant les caractéristiques du préambule de la revendication 1 est connu du document DE 20 35 507 A1. L'immobilisation est généralement réalisée à l'aide d'un pêne mobile commandé en déplacement par l'intermédiaire d'un verrou rotatif, entre une position de repos, dans laquelle la colonne de direction est libérée, et une position active dans laquelle la colonne de direction est bloquée en rotation.

Pour ce faire, on monte un tel boîtier autour de la colonne de direction. Parmi les antivols connus de l'état de la technique, certains prévoient pour le montage du boîtier sur la colonne de direction, un collier de serrage fixé au boîtier et monté autour de la colonne de direction. La structure connue du collier de serrage comporte deux demi-colliers réunis d'une part à l'aide d'une goupille transversale et d'autre part au moyen d'une vis pour monter par serrage le dispositif antivol sur la colonne de direction.

Toutefois, ce montage par serrage nécessite une liaison robuste entre les deux demi-colliers, ce qui exige dans l'état actuel des moyens de montage importants et coûteux. En effet, la mise en place de la goupille nécessite l'usage d'une pince mécanique pour réaliser cette liaison et demande la mise en oeuvre d'efforts importants. De plus, la difficulté de montage engendre des rebuts importants.

En outre, un dispositif antivol proposant une accessibilité pour le montage et par conséquent pour le démontage, pourra permettre à un voleur éventuel d'intervenir directement sur le mécanisme d'antivol pour provoquer le déverrouillage de l'antivol et ainsi s'emparer du véhicule, ce qui limite fortement le rôle anti-effraction du dispositif antivol.

La présente invention a donc pour objectif de pallier ces inconvénients de l'art antérieur en proposant un dispositif antivol pour colonne de direction amélioré permettant un montage manuel du dispositif antivol sur la colonne de direction simple et peu coûteux, tout en empêchant la désolidarisation des deux demi-colliers de serrage avant le montage sur la colonne de direction.

À cet effet, l'invention a pour objet un dispositif antivol pour une colonne de direction de véhicule automobile, comportant :
- un boîtier dans lequel est agencé un pêne mobile configuré pour immobiliser la colonne de direction en rotation et un verrou pour commander le déplacement dudit pêne, et
- un collier de serrage configuré pour être monté sur la colonne de direction, présentant un premier demi-collier solidaire du boîtier, et un second demi-collier dont :
   - une première extrémité est montée articulée par rapport au premier demi-collier selon un axe sensiblement parallèle à l'axe de la colonne de direction, et dont
   - une seconde extrémité est configurée pour être fixée au premier demi-collier lors du montage sur la colonne de direction, par l'intermédiaire d'un moyen de serrage,
- le second demi-collier (9b) portant à sa première extrémité (11) un axe support (15) de pivotement,
- le premier demi-collier (9a) comportant un palier (17) associé audit axe support (15), et une ouverture (19a) d'accès audit palier (17)
- un moyen de maintien dudit axe support (15) dans ledit premier demi-collier (9c) face audit palier (17), de manière à éviter une désolidarisation intempestive desdits demi-colliers (9a), (9b) avant le montage sur la colonne de direction (2),
- ledit moyen de maintien étant configuré de manière à obturer au moins partiellement l'ouverture (19a) d'accès audit palier (17) et retenir ledit axe (15) dans ledit premier demi- collier (9a), face audit palier (17),
caractérisé en ce que
- le moyen de maintien est réalisé sous la forme d'un étrier de maintien sensiblement en « U » pour recevoir ledit axe support.

Avec cette configuration, on s'affranchit du lourd moyen de montage pour la liaison entre les deux demi-colliers puisqu'une insertion manuelle simple et peu coûteuse de l'axe support dans le palier suffit, et assure une liaison robuste.

De plus, on assure la solidarisation provisoire des deux demi-colliers avant le montage serré autour de la colonne de direction.

Le dispositif antivol peut en outre comporter une ou plusieurs caractéristiques suivantes, prises séparément ou en combinaison :
- le premier demi-collier comporte un guide d'insertion dudit axe support dans ledit palier,
- le moyen de maintien est monté mobile en translation dans ledit palier pour atteindre ladite position de maintien,
- le moyen de maintien est monté mobile en rotation dans ledit palier pour atteindre ladite position de maintien,
- le moyen de maintien est réalisé en matériau plastique ou métallique,
- l'étrier de maintien possède une branche latérale dudit étrier qui obture au moins partiellement l'ouverture d'accès audit palier,
- ledit dispositif comporte en outre un moyen de blocage du moyen de maintien en position de maintien,
- le moyen de maintien est maintenu en position de maintien par un montage en force dudit moyen de maintien sur ledit palier,
- le boîtier comporte un moyen de blocage configuré pour venir en appui contre le moyen de maintien,
- l'étrier de maintien présente une portion sensiblement en crochet configurée pour coopérer avec un contre crochet prévu sur un guide pêne monté solidaire du boîtier,
- l'étrier de maintien présente sur sa paroi externe au moins une languette de clipsage pour coopérer avec au moins une encoche de clipsage complémentaire prévue dans ledit premier demi-collier,
- l'étrier de maintien est monté coulissant dans ledit palier pour atteindre ladite position de maintien

L'invention concerne également un procédé de montage d'un étrier de maintien dans un tel dispositif antivol, caractérisé en ce qu'il comprend les étapes suivantes :
- on monte ledit axe support dans l'étrier de maintien,
- on monte l'ensemble formé par l'étrier de maintien et ledit axe support dans ledit palier, ledit étrier étant présenté dans ledit premier demi-collier.

L'invention concerne encore un procédé de montage d'un étrier de maintien dans un tel dispositif antivol, caractérisé en ce qu'il comprend les étapes suivantes :
- on monte l'étrier de maintien dans ledit premier demi-collier selon un premier axe d'insertion sensiblement parallèle audit axe de pivotement, dans une position d'ouverture dans laquelle l'espace intérieur dudit étrier délimité par les deux branches latérales débouche sur une ouverture dudit premier demi-collier de sorte que les ouvertures dudit premier demi-collier et dudit étrier coïncident,
- on monte ledit axe support dans ledit étrier selon un second axe d'insertion sensiblement perpendiculaire au premier axe d'insertion, et
- on entraîne l'ensemble formé par ledit étrier et ledit axe support en rotation selon ledit axe de pivotement, jusqu'à ce qu'une branche latérale dudit étrier obture au moins partiellement l'ouverture dudit premier demi-collier.

D'autres caractéristiques et avantages de l'invention ressortiront de la description suivante, donnée à titre d'exemple, sans caractère limitatif, en regard des dessins annexés sur lesquels :
- la figure 1 représente un dispositif antivol destiné à être monté sur une colonne de direction par l'intermédiaire d'un collier de serrage,
- la figure 2a illustre un premier mode de réalisation d'un dispositif antivol dont les deux demi-colliers sont désassemblés,
- la figure 2b est une vue en coupe partielle du premier demi-collier,
- la figure 3 est une vue assemblée du dispositif de la figure 2a,
- la figure 4a représente plus en détail un étrier de maintien du dispositif de la figure 2a,
- la figure 4b représente l'étrier de la figure 4a coopérant avec un guide pêne du dispositif de la figure 2a,
- la figure 5 illustre un deuxième mode de réalisation d'un dispositif antivol dont les deux demi-colliers sont désassemblés,
- la figure 6a est une vue assemblée du dispositif de la figure 5,
- la figure 6b est une vue de dessus de la figure 6a dans une position de maintien,
- la figure 7 est une vue de dessus d'un étrier de maintien du dispositif de la figure 5.

Sur ces figures et dans la suite de la description, les éléments identiques ou similaires sont désignés par les mêmes références.

L'invention concerne un dispositif antivol destiné à être monté sur une colonne de direction (non représentée) de véhicule automobile, afin de sécuriser l'utilisation de la colonne de direction.

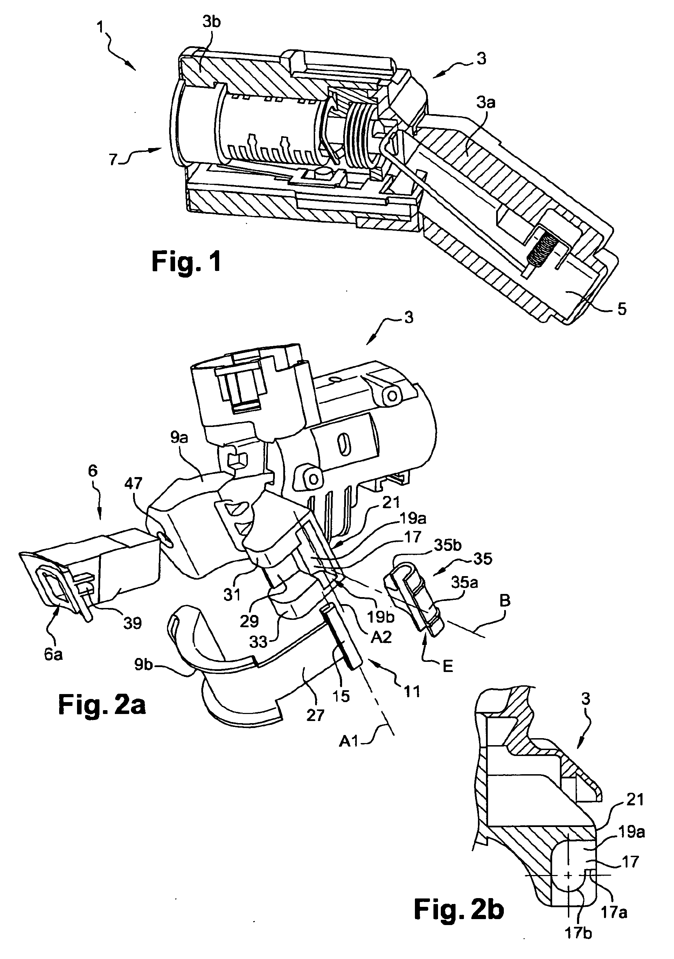

La figure 1 représente un mode de réalisation pour un dispositif antivol 1. Ce dispositif antivol 1 comporte :
- un boîtier 3 d'un corps d'antivol présentant une première partie 3a et une seconde partie 3b,
- un pêne 5 monté mobile dans la première partie 3a,
- un verrou 7 monté rotatif dans la seconde partie 3b, pour commander le déplacement du pêne 5.

Le pêne 5 est monté mobile entre une position décondamnée dans laquelle il est destiné à être disposé à distance de la colonne de direction (non représentée), et une position condamnée dans laquelle il est destiné à immobiliser la colonne de direction en rotation.

À cet effet, le pêne 5 est monté coulissant dans la première partie 3a du boîtier 3, via un guide pêne 6 (voir figure 2a). Ainsi, dans la position décondamnée, le pêne 5 est en position escamotée arrière, c'est-à-dire, complètement rentré à l'intérieur du guide pêne 6. À l'inverse, dans la position condamnée, le pêne 5 fait saillie à l'extrémité 6a du guide pêne 6 de manière à pouvoir coopérer classiquement par emboîtement avec la colonne de direction.

Comme l'illustrent les figures 2,3 et 5 à 6b, on prévoit un collier de serrage 9 fixé au boîtier 3 et destiné à être monté autour de la colonne de direction par serrage pour monter le boîtier 3 sur la colonne de direction. Bien entendu, le collier de serrage 9 peut former une partie intégrante du boîtier 3.

Ce collier de serrage 9, par exemple réalisé en tôle pliée, présente un diamètre intérieur légèrement supérieur au diamètre extérieur de l'arbre de la colonne de direction pour pouvoir être disposé autour de celui-ci.

En outre, le collier de serrage 9 présente un premier demi-collier 9a et un second demi-collier 9b.

Le premier demi-collier 9a peut être fixé au boîtier 3 ou faire partie intégrante de ce boîtier 3, plus précisément à la première partie 3a du boîtier 3 intégrant le pêne 5 et le guide pêne 6, et le second demi-collier 9b est relié au premier demi-collier 9a. Pour cela, les deux demi-colliers 9a et 9b présentent des formes complémentaires.

Le second demi-collier 9b comporte une première 11 et une seconde 13 extrémité reliées respectivement au premier demi-collier 9a.

La première extrémité 11 est montée articulée par rapport au premier demi-collier 9a, selon un axe de pivotement A1 sensiblement parallèle à l'axe de la colonne de direction.

Pour une liaison articulée robuste entre les premier 9a et second 9b demi-colliers, la première extrémité 11 du second demi-collier 9b porte un axe support de pivotement 15.

Pour cela, la première extrémité 11 du second demi-collier 9b peut former un logement pour recevoir l'axe support 15, par exemple réalisé sous la forme d'une goupille.

Selon une variante de réalisation, l'axe support 15 est formé d'une seule pièce avec le second demi-collier 9b, par exemple par une opération de roulage de la première extrémité 11 du second demi-collier 9b.

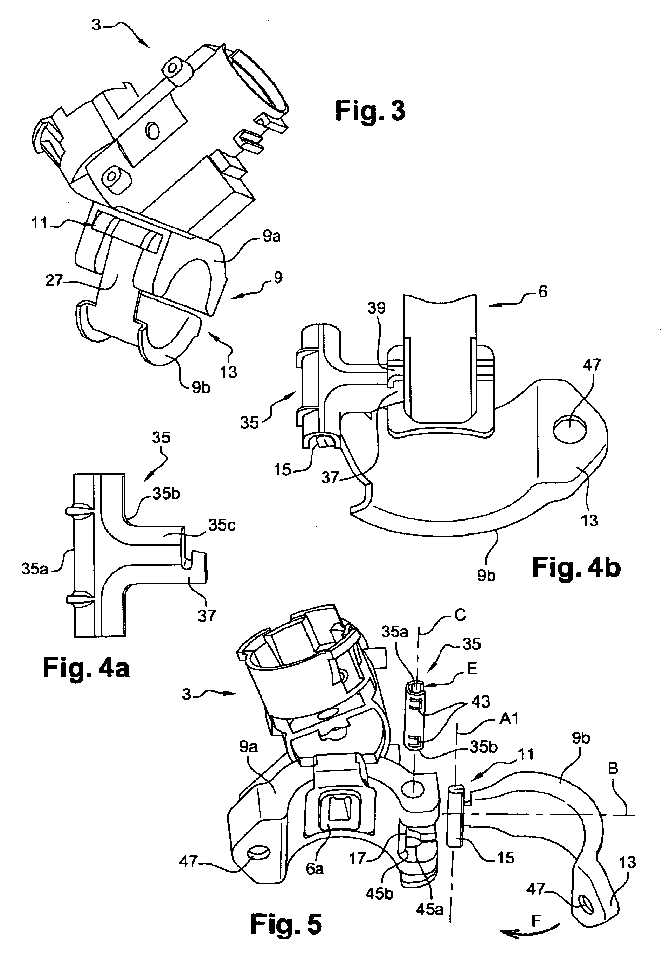

Selon une autre variante illustrée aux figures 2 et 5, le second demi-collier 9b formé d'une seule pièce avec l'axe support 15 peut être sous la forme générale d'un « T », les extrémités du T servant d'axe.

Cet axe support 15 coopère avec un palier 17 associé du premier demi-collier 9a. Le palier 17 est ménagé dans une face latérale 21 du premier demi-collier 9a disposé en vis-à-vis de la première extrémité 11 du second demi-collier 9b.

Aussi, dans cette face latérale 21 du premier demi-collier 9a, une ouverture 19a est prévue en vis-à-vis de la première extrémité 11 du second demi-collier 9b afin que l'axe 15 puisse être introduit dans ledit palier 17 prévu dans le premier demi-collier 9a. L'ouverture 19a débouche donc ainsi sur l'extrémité ouverte dudit demi-collier 9a.

Cette ouverture 19a constitue un passage obligatoire dudit axe support 15 dans le palier 17. Autrement dit l'ouverture 19a constitue l'accès audit palier vers l'intérieur ou vers l'extérieur dudit premier demi-collier 9a.

Il peut être prévu que le premier demi-collier 9a comporte un guide d'insertion 19b pour l'axe support 15. Plus précisément, ledit guide d'insertion 19b est ménagé dans ladite ouverture 19a.

Le guide d'insertion 19b est dans l'exemple illustré une fente d'insertion ménagée dans la face latérale 21 et s'étendant selon un axe A2 sensiblement parallèle à l'axe support 15 pour permettre d'introduire l'axe support 15 dans le premier demi-collier 9a.

En outre, l'axe support 15 est introduit dans le palier 17, via l'ouverture 19a, selon un axe d'insertion B sensiblement perpendiculaire à l'axe de pivotement A1.

Selon un premier mode de réalisation, le premier demi collier 9a forme un logement d'insertion de l'axe support 15 de forme générale parallélépipédique et accessible via l'ouverture 19a dudit premier demi-collier, le palier 17 présentant un fond plan.

Selon un deuxième mode de réalisation possible et comme illustré à la figure 2b, le palier 17 peut également comporter au moins un décrochement 17b, en fond de palier correspondant à la fin de course d'introduction de l'axe support 15 sur ledit palier 17 du premier demi-collier 9a.

Ce décrochement 17b constitue l'emplacement final dudit axe support 15 une fois inséré dans le demi-collier 9a et sécurise le positionnement de l'axe support 15 en fond de palier 17 lors du serrage du deuxième demi-collier 9b avec le premier demi collier 9a.

Le décrochement 17b prolonge donc une surface rectiligne 17a du palier 17, laquelle surface rectiligne 17a est parcourue par l'axe support 15 lors de son introduction.

Par le fait que ce décrochement 17b prolonge la surface rectiligne 17a du palier 17, sensiblement en direction transversale à cette surface rectiligne, le palier 17 présente au global la forme d'un « L » lorsqu'il est observé latéralement depuis l'intérieur du palier 17.

Cette forme en « L » permet donc un déplacement de l'axe support 15 dans deux directions sensiblement perpendiculaires entre elles.

Le décrochement 17b partie du palier 17 est réalisé selon un axe sensiblement perpendiculaire à l'axe de l'ouverture 19a et présente une forme, par exemple semi cylindrique, fermée à une extrémité par la partie rectiligne 17a dudit palier 17.

Par ailleurs, de manière à faciliter l'insertion de l'axe support 15 dans le palier 17 du premier demi-collier 9a :
- le second demi-collier 9b peut présenter une portion latérale 27 de largeur réduite par rapport au reste du second demi-collier 9b, et
- le premier demi-collier 9a peut présenter un évidement 29 de largeur correspondante, ménagé sur sa face latérale 21 de façon à former deux saillies 31, 33 de part et d'autre de l'évidement 29.

De plus, le dispositif 1 comporte un moyen de maintien de l'axe support 15 dans ledit premier demi-collier 9c face audit palier 17, de manière à éviter une désolidarisation intempestive des demi-colliers 9a, 9b avant le montage sur la colonne de direction. À cet effet, le moyen de maintien est amovible et peut être retiré pour le montage du collier 9 autour de la colonne de direction.

Ce moyen de maintien assure également une fonction de cache de l'ouverture 19a dudit palier.

Le moyen de maintien est configuré de manière à obturer au moins partiellement l'ouverture 19a du palier 17. Ainsi, ce moyen de maintien retient l'axe support 15 dans ledit palier et empêche tout retrait de l'axe support 15 par le biais de l'ouverture 19a dudit palier 17.

En d'autres termes, ledit moyen de maintien est agencé dans le palier 17 de telle manière qu'il permet de maintenir l'axe support 15 dans ledit palier 17 sans toutefois le bloquer de tous mouvements. Ainsi l'axe support 15 peut être uniquement mobile en rotation dans ledit palier 17 tout en ne pouvant pas s'extraire du fait de l'obturation au moins partielle de ladite ouverture 19a par ledit moyen de maintien.

Le moyen de maintien est par exemple un étrier de maintien 35 présentant une forme générale sensiblement en « U » avec une première 35a et une seconde 35b branches latérales.

L'étrier de maintien 35 peut chevaucher l'axe support 15, ses bras 35a et 35b se situant alors de part et d'autre de l'axe support 15.

L'une des branches 35b est située à l'intérieur du premier demi-collier 9a par rapport à l'axe support 15, l'autre branche 35a est située du côté extérieur du demi-collier par rapport à l'axe support 15.

C'est cette branche 35a qui vient obturer l'ouverture 19a et empêcher ainsi une sortie intempestive dudit axe support 15 hors du premier demi-collier 9a.

Selon un autre mode de réalisation, le moyen de maintien présente une partie obturant au moins partiellement l'ouverture 19a, sans pour autant présenter une partie s'étendant du côté intérieur de l'axe support 15.

Ainsi, le moyen de maintien présente selon cette autre alternative, une forme de L, dont une branche obture au moins partiellement l'ouverture 19a et dont l'autre branche recouvre l'axe support 15 entre son côté extérieur et son côté intérieur par rapport au premier demi-collier 9a.

Un mode de réalisation où le moyen de maintien présente une partie disposée en obturation au moins partielle de l'ouverture 19a est également prévu. Il peut être ainsi constitué par une pièce de retenue ancrée sur une bordure de l'ouverture 19a.

L'espace intérieur E délimité par ces deux branches latérales 35a, 35b forme un logement pour recevoir l'axe support 15.

Cet étrier 35 est placé dans le palier 17 dans une position de maintien dans laquelle la première branche latérale 35a obture l'ouverture d'insertion 19a. En effet, dans ce cas, l'axe support 15 ne peut plus être retiré du palier 17 via l'ouverture 19a.

L'étrier 35 peut atteindre cette position de maintien par translation ou en alternative par rotation dans le palier 17.

Selon un premier mode de réalisation illustré sur les figures 2 et 3, l'étrier 35 peut être monté dans le palier 17 selon l'axe B d'insertion de l'axe support 15 dans le palier 17.

Selon une alternative de réalisation, on pourrait prévoir d'insérer d'abord l'étrier 35 dans le palier 17 puis insérer l'axe support 15 dans l'étrier avant de placer l'étrier 35 dans la position de maintien, par exemple par rotation du deuxième demi-collier 9b.

Dans l'exemple illustré, on prévoit d'insérer d'abord l'axe support 15 dans l'étrier 35, puis on insère l'ensemble formé par l'étrier 35 et par l'axe support 15 dans le palier 17 via la fente d'insertion 19b.

Cet ensemble ainsi monté, l'ouverture 19a de la fente d'insertion 19b est obturée par la branche latérale 35a et l'axe support 15 est bloqué dans le palier 17.

L'étrier 35 peut être monté en force dans le palier 17 pour assurer le blocage de l'étrier 35 dans la position de maintien et empêcher tout retrait intempestif de l'étrier 35 et par conséquent de l'axe support 15. Dans ce cas, l'étrier 35 subit une contrainte qui le fixe solidement dans le palier 17.

Pour plus de sécurité, on peut prévoir un moyen de blocage supplémentaire de l'étrier 35.

Par exemple, le guide pêne 6 peut venir bloquer l'étrier 35 par appui lorsqu'il est monté sur le boîtier 3, afin de maintenir l'étrier 35 dans le palier 17 dans la position de maintien. Le guide pêne 6 forme alors un moyen de blocage pour l'étrier 35.

Bien entendu, on peut prévoir qu'une autre partie ou composant du boîtier 3 peut former un tel moyen de blocage de l'étrier 35.

À cet effet, l'étrier 35 comporte une troisième branche 35c, mieux visible sur les figures 4a et 4b, s'étendant perpendiculairement à l'axe de pivotement A1, depuis la deuxième branche latérale 35b vers le guide pêne 6.

On peut prévoir encore un moyen d'accroche de l'étrier 35 au boîtier 3 ou à tout autre composant du boîtier 3, comme par exemple le guide pêne 6.

A cet effet la troisième branche 35c présente une portion d'extrémité sensiblement en crochet 37 pour coopérer avec un contre crochet 39 prévu dans cet exemple sur le guide pêne 6.

Ainsi, une fois l'étrier 35 placé dans la position de maintien dans le palier 17, le crochet 37 et le contre crochet 39 immobilisent l'étrier 35 qui ne peut alors pas être enlevé sans une action volontaire d'un opérateur, par exemple avant le montage du collier 9 autour de la colonne de direction.

En alternative, on pourrait prévoir de bloquer l'étrier 35 dans la position de maintien par clipsage.

Selon un deuxième mode de réalisation illustré sur les figures 5 à 7, l'étrier 35 peut être monté dans le palier 17 selon axe C sensiblement perpendiculaire à l'axe B d'insertion de l'axe support 15 dans le palier 17 et sensiblement parallèle à l'axe de pivotement A1.

À cet effet, on prévoit un trou d'insertion 41 de l'étrier 35 sur le dessus de la face latérale 21 du premier demi-collier 9a, au niveau du palier 17. Ce trou d'insertion 41 présente une forme circulaire correspondante à la forme de l'étrier 35.

Dans ce cas, l'étrier 35 et l'axe support 15 sont montés de façon séparée dans le palier 17.

De manière alternative, ce trou d'insertion 41 est co-axial avec le décrochement ou l'emplacement final de l'axe support 15 dans ledit palier 17.

Plus précisément, on insère l'étrier 35 dans le palier 17 dans une position d'ouverture, de sorte que l'espace intérieur E de l'étrier 35 débouche sur l'ouverture 19a dudit palier permettant alors de monter ensuite l'axe support 15 dans l'étrier 35.

Dans cette position d'ouverture, l'ouverture de l'étrier 35 et l'ouverture 19a du palier 17 coïncident de sorte qu'aucune branche latérale 35a, 35b de l'étrier 35 n'obture l'ouverture 19a.

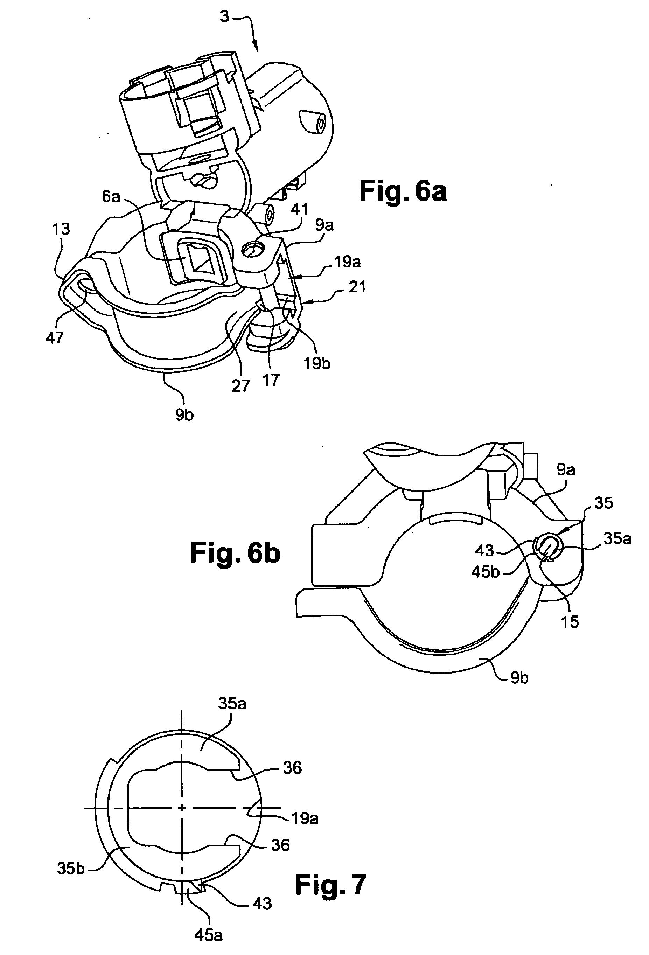

Ensuite, en faisant une rotation de l'ensemble formé par l'étrier 35 et l'axe support 15 selon l'axe de pivotement A1 suivant la flèche F (figure 5), on entraîne l'étrier 35 vers la position de maintien de sorte qu'une branche latérale 35a obture l'ouverture 19a dudit palier 17 (figures 6a et 6b).

Comme mieux visible sur la figure 7, l'étrier 35 présente une forme interne complémentaire de la forme externe de l'axe support 15, telle que lorsque le second demi-collier 9b pivote, l'axe support 15 appuie sur les bords latéraux 36 de l'étrier 35 pour l'entraîner en rotation jusqu'à la position de maintien.

On peut prévoir également que l'étrier présente moins de matière au niveau du milieu des branches latérales 35a,35b de manière à faciliter la déformation de l'étrier 35 pour son retrait du palier 17 par un opérateur.

En outre, en se référant à nouveau à la figure 5, l'étrier 35 peut présenter sur sa paroi externe au moins une languette de clipsage 43 pour coopérer avec une encoche de clipsage 45a, 45b complémentaire prévue dans le palier 17, de manière à former un moyen de blocage supplémentaire par clipsage de l'étrier 35 dans la position de maintien.

Dans cet exemple, l'étrier 35 présente deux languettes 43 sur une même branche latérale 35b, une première languette 43 sur le haut de la branche et une deuxième languette 43 sur le bas de la branche.

Dans la position d'ouverture (figure 7), les languettes 43 engagent respectivement des premières encoches 45a complémentaires de sorte que l'étrier 35 soit maintenu dans cette position d'ouverture pour permettre le montage de l'axe support 15 dans l'étrier 35.

Puis, lorsque l'étrier 35 est entraîné en rotation vers la position de maintien, les languettes 43 engagent respectivement des secondes encoches complémentaires 45b (figure 6b), de façon à empêcher toute rotation intempestive de l'étrier 35 pour retourner dans la position d'ouverture. L'axe support 15 ne peut donc pas être retiré du palier 17 tant que l'étrier 35 est dans cette position de maintien.

Ainsi, lorsque le dispositif antivol 1 n'est pas encore monté sur la colonne de direction, les deux demi-colliers 9a, 9b ne peuvent être désolidarisés sans enlever au préalable l'étrier 35 monté en force dans le palier 17 ou maintenu par un moyen supplémentaire par exemple d'accroche ou de clipsage.

Ainsi, l'assemblage du boîtier 3 et du collier de serrage 9 du dispositif antivol 1 s'effectue comme suit.

L'ensemble des composants du boîtier 3 sont assemblés et introduits dans le boîtier 3. Le premier demi-collier 9a est fixé au boîtier 3. L'étrier et l'axe support 15 porté par la première extrémité 11 du second demi-collier 9b sont insérés dans le palier 17 associé du premier demi-collier 9a selon le premier ou le deuxième mode de réalisation décrits précédemment, et l'étrier 35 est placé dans la position de maintien pour maintenir en place l'axe support 15 dans le palier 17.

Le dispositif antivol 1 ainsi assemblé à la main peut être manipulé et transporté sans risque de désolidarisation intempestive des demi-colliers 9a, 9b pour être monté sur la colonne de direction.

Par ailleurs, lors du montage du dispositif antivol 1 sur la colonne de direction, la seconde extrémité 13 du second demi-collier 9b est fixée au premier demi-collier 9a par l'intermédiaire d'un moyen de serrage, par exemple une vis coopérant avec des trous taraudés 47 respectivement prévus dans les premier 9a et second 9b demi-colliers.

Dans ce cas, l'effort exercé sur le second demi-collier 9b assure le maintien de l'axe support 15 dans le palier 17. Ainsi, lorsque le dispositif antivol 1 est monté sur la colonne de direction, les deux demi-colliers 9a, 9b ne peuvent être désolidarisés sans enlever au préalable le moyen de serrage.

Ainsi le montage du dispositif antivol 1 sur la colonne de direction, s'effectue comme suit. Le premier demi-collier 9a est disposé autour de la colonne de direction, le second demi-collier 9b pivote de sorte que sa seconde extrémité 13 soit disposée en regard du premier demi-collier 9a, et cette dernière est fixée par serrage au premier demi-collier 9a.

Le palier 17 résiste aux efforts engendrés par le serrage des deux demi-colliers 9a, 9b, de sorte que l'axe support 15 est maintenu dans le palier 17 lorsque le dispositif antivol 1 est monté sur la colonne de direction.

On comprend donc qu'un tel dispositif antivol assure une liaison robuste entre les deux demi-colliers 9a, 9b afin de supporter l'effort engendré par le serrage sur la colonne de direction et afin de résister aux tentatives d'effraction, tout en empêchant la désolidarisation des deux demi-colliers 9a, 9b avant le montage sur la colonne de direction.

Avantageusement, un tel dispositif antivol pour colonne de direction permet un montage manuel du dispositif antivol sur la colonne de direction simple et peu coûteux, tout en empêchant la désolidarisation des deux demi-colliers de serrage avant le montage sur la colonne de direction.

## Revendications

1. Dispositif antivol pour une colonne de direction de véhicule automobile, comportant :
- un boîtier (3) dans lequel est agencé un pêne (5) mobile configuré pour immobiliser la colonne de direction en rotation et un verrou (7) pour commander le déplacement dudit pêne (5), et
- un collier de serrage (9) configuré pour être monté sur la colonne de direction, présentant un premier demi-collier (9a) solidaire du boîtier (3), et un second demi-collier (9b) dont :
• une première extrémité (11) est montée articulée par rapport au premier demi-collier (9a) selon un axe de pivotement (A1) sensiblement parallèle à l'axe de la colonne de direction, et dont
• une seconde extrémité (13) est configurée pour être fixée au premier demi-collier (9a) lors du montage sur la colonne de direction, par l'intermédiaire d'un moyen de serrage,
- le second demi-collier (9b) portant à sa première extrémité (11) un axe support (15) de pivotement,
- le premier demi-collier (9a) comportant un palier (17) associé audit axe support (15), et une ouverture (19a) d'accès audit palier (17)
- un moyen de maintien dudit axe support (15) dans ledit premier demi-collier (9c) face audit palier (17), de manière à éviter une désolidarisation intempestive desdits demi-colliers (9a), (9b) avant le montage sur la colonne de direction (2), ledit moyen de maintien étant configuré de manière à obturer au moins partiellement l'ouverture (19a) d'accès audit palier (17) et retenir ledit axe (15) dans ledit premier demi-collier (9a), face audit palier (17), caracérisé en ce que
le moyen de maintien est réalisé sous la forme d'un étrier (35) de maintien sensiblement en « U » pour recevoir ledit axe support (15).

2. Dispositif selon la revendication 1, **caractérisé en ce que** le premier demi-collier (9a) comporte un guide d'insertion (19b) dudit axe support (15) dans ledit palier (17).

3. Dispositif selon la revendication 1, **caractérisé en ce que** le moyen de maintien est monté mobile en translation dans ledit palier (17) pour atteindre ladite position de maintien.

4. Dispositif selon la revendication 1, **caractérisé en ce que** le moyen de maintien est monté mobile en rotation dans ledit palier (17) pour atteindre ladite position de maintien.

5. Dispositif selon l'une quelconque des revendications précédentes, **caractérisé en ce que** le moyen de maintien est réalisé en matériau plastique ou métallique.

6. Dispositif selon l'une quelconque des revendications précédentes, **caractérisé en ce que** l'étrier (35) de maintien possède une branche latérale (35a) qui obture au moins partiellement l'ouverture (19a) d'accès audit palier (17).

7. Dispositif selon l'une quelconque des revendications précédentes, **caractérisé en ce qu'**il comporte en outre un moyen de blocage du moyen de maintien en position de maintien.

8. Dispositif selon l'une des revendications précédentes, **caractérisé en ce que** le moyen de maintien est maintenu en position de maintien par un montage en force du moyen de maintien sur ledit palier (17).

9. Dispositif selon l'une des revendications 7 ou 8, **caractérisé en ce que** le boîtier (3) comporte un moyen de blocage configuré pour venir en appui contre ledit moyen de maintien.

10. Dispositif selon l'une quelconque des revendications 4 à 6 prise en combinaison avec l'une des revendications 7 ou 8, **caractérisé en ce que** l'étrier de maintien présente une portion sensiblement en crochet (37) configurée pour coopérer avec un contre crochet (39) prévu sur un composant (6) du boîtier (3).

11. Dispositif selon l'une quelconque des revendications 4 à 6, prise en combinaison avec l'une des revendications 7 ou 8, **caractérisé en ce que** l'étrier de maintien (35) présente sur sa paroi externe au moins une languette (43) de clipsage pour coopérer avec au moins une encoche (45a, 45b) de clipsage complémentaire prévue dans le premier demi-collier (9a).

12. Procédé de montage d'un étrier de maintien dans un dispositif antivol selon l'une quelconque des revendications 3 à 11, **caractérisé en ce qu'**il comprend les étapes suivantes :
- on monte ledit axe support (15) dans l'étrier de maintien (35),
- on monte l'ensemble formé par l'étrier de maintien (35) et ledit axe support (15) dans ledit premier demi-collier (9a).

13. Procédé de montage d'un étrier de maintien dans un dispositif antivol selon l'une quelconque des revendications 4 à 11, **caractérisé en ce qu'**il comprend les étapes suivantes :
- on monte l'étrier de maintien (35) dans ledit premier demi-collier (9a) selon un premier axe d'insertion (C) sensiblement parallèle audit axe de pivotement (A1), dans une position d'ouverture dans laquelle l'espace intérieur (E) dudit étrier (35) délimité par les deux branches latérales (35a, 35b) débouche sur une ouverture (19a) dudit premier demi-collier (9a) de sorte que les ouvertures dudit premier demi-collier (9a) et dudit étrier (35) coïncident,
- on monte ledit axe support (15) dans ledit étrier (35) selon un second axe d'insertion (B) sensiblement perpendiculaire au premier axe d'insertion (C), et
- on entraîne l'ensemble formé par ledit étrier (35) et ledit axe support (15) en rotation selon ledit axe de pivotement (A1), jusqu'à ce qu'une branche latérale (35a) dudit étrier (35) obture au moins partiellement l'ouverture dudit premier demi-collier (9a).

## Patentansprüche

1. Diebstahlsicherungsvorrichtung für eine Lenksäule eines Kraftfahrzeugs, die Folgendes umfasst:
- ein Gehäuse (3), in dem ein beweglicher Bolzen (5) angeordnet ist, der dazu konfiguriert ist, die Lenksäule gegen Drehung festzulegen, und ein Riegel (7) zur Aktivierung der Verschiebung des Bolzens (5), und
- eine Klemmschelle (9), die dazu konfiguriert ist, an der Lenksäule befestigt zu werden, und eine fest mit dem Gehäuse (3) verbundene erste Halbschelle (9a) und eine zweite Halbschelle (9b) aufweist, wobei bei der zweiten Halbschelle:
• ein erstes Ende (11) bezüglich der ersten Halbschelle (9a) entlang einer im Wesentlichen parallel zur Achse der Lenksäule verlaufenden Schwenkachse (A1) gelenkig befestigt ist, und
• ein zweites Ende (13) dazu konfiguriert ist, beim Befestigen an der Lenksäule mittels eines Klemmmittels an der ersten Halbschelle (9a) befestigt zu werden,
- wobei die zweite Halbschelle (9b) an ihrem ersten Ende (11) eine Schwenktragachse (15) trägt,
- wobei die erste Halbschelle (9a) ein der Tragachse (15) zugeordnetes Lager (17) und eine Zugangsöffnung (19a) zum Lager (17) umfasst,
- ein Mittel zum Halten der Tragachse (15) in der ersten Halbschelle (9a) dem Lager (17) überliegend, um eine ungewollte Trennung der Halbschellen (9a), (9b) vor dem Befestigen an der Lenksäule (2) zu vermeiden, wobei das Haltemittel so konfiguriert ist, dass es die Zugangsöffnung (19a) zum Lager (17) zumindest teilweise verschließt und die Achse (15) zum Lager (17) hin weisend in der ersten Halbschelle (9a) festhält, **dadurch gekennzeichnet, dass**
das Haltemittel in Form eines im Wesentlichen U-förmigen Haltebügels (35) zum Aufnehmen der Tragachse (15) ausgeführt ist.

2. Vorrichtung nach Anspruch 1, **dadurch gekennzeichnet, dass** die erste Halbschelle (9a) eine Führung (19b) zum Einschieben der Tragachse (15) in das Lager (17) umfasst.

3. Vorrichtung nach Anspruch 1, **dadurch gekennzeichnet, dass** das Haltemittel translatorisch beweglich im Lager (17) befestigt ist, um in die Halteposition zu gelangen.

4. Vorrichtung nach Anspruch 1, **dadurch gekennzeichnet, dass** das Haltemittel drehbeweglich im Lager (17) befestigt ist, um in die Halteposition zu gelangen.

5. Vorrichtung nach einem der vorhergehenden Ansprüche, **dadurch gekennzeichnet, dass** das Haltemittel aus einem Kunststoff- oder metallischen Material hergestellt ist.

6. Vorrichtung nach einem der vorhergehenden Ansprüche, **dadurch gekennzeichnet, dass** der Haltebügel (35) einen Seitenschenkel (35a) aufweist, der die Zugangsöffnung (19a) zum Lager (17) zumindest teilweise verschließt.

7. Vorrichtung nach einem der vorhergehenden Ansprüche, **dadurch gekennzeichnet, dass** sie ferner ein Mittel zum Blockieren des Haltemittels in der Halteposition umfasst.

8. Vorrichtung nach einem der vorhergehenden Ansprüche, **dadurch gekennzeichnet, dass** das Haltemittel durch kraftschlüssiges Befestigen des Haltemittels am Lager (17) in der Halteposition gehalten wird.

9. Vorrichtung nach Anspruch 7 oder 8, **dadurch gekennzeichnet, dass** das Gehäuse (3) ein Blockiermittel umfasst, das dazu konfiguriert ist, gegen das Haltemittel zur Anlage zu kommen.

10. Vorrichtung nach einem der Ansprüche 4 bis 6 in Verbindung mit Anspruch 7 oder 8, **dadurch gekennzeichnet, dass** der Haltebügel einen im Wesentlichen hakenförmigen Abschnitt (37) aufweist, der dazu konfiguriert ist, mit einem Gegenhaken (39) zusammenzuwirken, der an einem Element (6) des Gehäuses (3) vorgesehen ist.

11. Vorrichtung nach einem der Ansprüche 4 bis 6 in Verbindung mit Anspruch 7 oder 8, **dadurch gekennzeichnet, dass** der Haltebügel (35) an seiner Außenwand mindestens eine Schnappverbindungszunge (43) zum Zusammenwirken mit mindestens einer komplementären Schnappverbindungskerbe (45a, 45b), die in der ersten Halbschelle (9a) vorgesehen ist, aufweist.

12. Verfahren zum Befestigen eines Haltebügels in einer Diebstahlsicherungsvorrichtung nach einem der Ansprüche 3 bis 11, **dadurch gekennzeichnet, dass** es die folgenden Schritte umfasst:
- Befestigen der Tragachse (15) im Haltebügel (35),
- Befestigen der durch den Haltebügel (35) und die Tragachse (15) gebildeten Anordnung in der ersten Halbschelle (9a).

13. Verfahren zum Befestigen eines Haltebügels in einer Diebstahlsicherungsvorrichtung nach einem der Ansprüche 4 bis 11, **dadurch gekennzeichnet, dass** es die folgenden Schritte umfasst:
- Befestigen des Haltebügels (35) in der ersten Halbschelle (9a) gemäß einer zur Schwenkachse (A1) im Wesentlichen parallel verlaufenden ersten Einschubachse (C) in einer Öffnungsposition, in der der von den beiden Seitenschenkeln (35a, 35b) begrenzte Innenraum (E) des Bügels (35) so in einer Öffnung (19a) der ersten Halbschelle (9a) mündet, dass die Öffnung der ersten Halbschelle (9a) und die des Bügels (35) zusammenfallen,
- Befestigen der Tragachse (15) im Bügel (35) entlang einer zur ersten Einschubachse (C) im Wesentlichen senkrecht verlaufenden zweiten Einschubachse (B) und
- Indrehungversetzen der durch den Bügel (35) und die Tragachse (15) gebildeten Anordnung entlang der Schwenkachse (A1), bis ein Seitenschenkel (35a) des Bügels (35) die Öffnung der ersten Halbschelle (9a) zumindest teilweise verschließt.

## Claims

1. Antitheft device for a steering column of a motor vehicle, comprising:
- a housing (3) in which a movable bolt (5) is arranged that is configured to prevent the steering column from rotating and a lock (7) for controlling the movement of said bolt (5), and
- a clamping collar (9) configured to be mounted on the steering column and having a first half-collar (9a) secured to the housing (3), and a second half-collar (9b) of which:
• a first end (11) is mounted articulated relative to the first half-collar (9a) along a pivoting axis (A1) substantially parallel to the axis of the steering column, and of which
• a second end (13) is configured to be attached to the first half-collar (9a) upon installation on the steering column, by means of a clamping means,
- the second half-collar (9b) supporting at its first end (11) a pivoting support shaft (15),
- the first half-collar (9a) comprising a bearing (17) associated with said support shaft (15) and an opening (19a) for access to said bearing (17),
- a means for retaining said support shaft (15) in said first half-collar (9a) facing said bearing (17) so as to prevent an inadvertent separation of said half-collars (9a), (9b) before installation on the steering column (2), said retention means being configured so as to at least partially close off the opening (19a) for access to said bearing (17) and keep said shaft (15) in said first half-collar (9a) facing said bearing (17), **characterized in that**
the retention means is made in the form of a substantially U-shaped retention yoke (35) for receiving said support shaft (15).

2. Device according to Claim 1, **characterized in that** the first half-collar (9a) comprises an insertion guide (19b) for inserting said support shaft (15) into said bearing (17).

3. Device according to Claim 1, **characterized in that** the retention means is mounted so as to be able to move in translation in said bearing (17) in order to reach said retention position.

4. Device according to Claim 1, **characterized in that** the retention means is mounted so as to be able to rotate in said bearing (17) in order to reach said retention position.

5. Device according to any one of the preceding claims, **characterized in that** the retention means is made of plastic or metal.

6. Device according to any one of the preceding claims, **characterized in that** the retention yoke (35) has a lateral branch (35a) which at least partially closes off the opening (19a) for access to said bearing (17).

7. Device according to any one of the preceding claims, **characterized in that** it also comprises a means for immobilizing the retention means in the retention position.

8. Device according to one of the preceding claims, **characterized in that** the retention means is held in the retention position by a forced installation of the retention means onto said bearing (17).

9. Device according to one of Claims 7 and 8, **characterized in that** the housing (3) comprises an immobilization means configured to rest against said retention means.

10. Device according to any one of Claims 4 to 6 taken in combination with one of Claims 7 and 8, **characterized in that** the retention yoke has a substantially hook-shaped portion (37) configured to interact with a counter-hook (39) provided on a component (6) of the housing (3).

11. Device according to any one of Claims 4 to 6, taken in combination with one of Claims 7 and 8, **characterized in that** the retention yoke (35) has, on its outer wall, at least one clipping tongue (43) for interacting with at least one complementary clipping notch (45a, 45b) provided in the first half-collar (9a).

12. Method for installing a retention yoke in an antitheft device according to any one of Claims 3 to 11, **characterized in that** it comprises the following steps:
- said support shaft (15) is installed in the retention yoke (35),
- the assembly formed by the retention yoke (35) and said support shaft (15) is installed in said first half-collar (9a).

13. Method for installing a retention yoke in an antitheft device according to any one of Claims 4 to 11, **characterized in that** it comprises the following steps:
- the retention yoke (35) is installed in said first half-collar (9a) along a first insertion axis (C) that is substantially parallel to said pivoting axis (A1), in an open position in which the internal space (E) of said yoke (35) delimited by the two lateral branches (35a, 35b) opens onto an opening (19a) of said first half-collar (9a) so that the openings of said first half-collar (9a) and of said yoke (35) coincide,
- said support shaft (15) is installed in said yoke (35) along a second insertion axis (B) that is substantially perpendicular to the first insertion axis (C), and
- the assembly formed by said yoke (35) and said support shaft (15) is rotated on said pivoting axis (A1) until a lateral branch (35a) of said yoke (35) at least partially closes the opening of said first half-collar (9a).
